# EUROPEAN PATENT APPLICATION

(11) **EP 4 779 781 A1**
(43) Date of publication of application: **22.07.2026**
(21) Application number: 24895483.6
(22) Date of filing: 27.05.2024
(51) Int. Cl.: H01M 50/342, H01M 50/30

(54) **PRESSURE RELIEF COMPONENT, BATTERY CELL, BATTERY, AND ELECTRIC DEVICE**

(30) Priority: 28.11.2023 CN 202311621350
(71) Applicant: Contemporary Amperex Technology Co., Limited, Ningde, Fujian 352100 (CN)
(72) Inventor: WU, Kai, Ningde, Fujian 352100 (CN); ZHOU, Wenlin, Ningde, Fujian 352100 (CN); YANG, Kaihuan, Ningde, Fujian 352100 (CN); LI, Quankun, Ningde, Fujian 352100 (CN); WANG, Peng, Ningde, Fujian 352100 (CN)
(74) Representative: Lorenz Seidler Gossel Part. mbB
(86) International application number: PCT/CN2024/095531
(87) International publication number: WO 2025/112373

(57) **Abstract**

A pressure relief component (23), a battery cell (20), a battery (100), and an electric device. The pressure relief component (23) is provided with a score groove (231); the score groove (231) extends along a closed trajectory and defines a pressure relief area; the score groove (231) comprises a first groove section (2311) and a second groove section (2312), and the first groove section (2311) and the second groove section (2312) are both arc sections, such that the first groove section (2311) and the second groove section (2312) extend smoothly, and stress concentration points are not prone to formation, thereby reducing the possibility of premature cracking caused by the stress concentration of the first groove section (2311) and the second groove section (2312), prolonging the service life of the battery cell (20). In addition, the first groove section (2311) is bent towards a center point of the pressure relief area, and the acting force borne by the first groove section (2311) is smaller, such that the possibility of the pressure relief area deforming under force is smaller, and the possibility of premature cracking of the score groove (231) is smaller. The second groove section (2312) is bent away from the center point of the pressure relief area, such that the area of the pressure relief area is larger, and a larger pressure relief channel can be formed after the score groove (231) is opened under force, thereby reducing the possibility of thermal runaway or even explosion of the battery cell (20).

## Description

### CROSS-REFERENCE TO RELATED APPLICATIONS

The present application claims priority to the Chinese patent application CN202311621350.5, filed on November 28, 2023 and titled "PRESSURE RELIEF COMPONENT, BATTERY CELL, BATTERY, AND ELECTRIC DEVICE", which is incorporated herein by reference in its entirety.

### TECHNICAL FIELD

The present application relates to the field of battery technologies, and in particular, to a pressure relief component, a battery cell, a battery, and an electric device.

### BACKGROUND

Energy conservation and emission reduction are the keys to the sustainable development of the automotive industry, and electric vehicles have become an important part of the sustainable development of the automotive industry owing to their advantages in energy saving and environmental protection. For electric vehicles, battery technology is a crucial factor driving their development.

In battery technology, how to prolong the service life of the battery is an urgent technical problem to be solved.

### SUMMARY

Embodiments of the present application provide a pressure relief component, a battery cell, a battery, and an electric device, which can reduce the possibility of premature cracking and pressure relief of the score line of the pressure relief component, thereby prolonging the service life of the battery.

According to a first aspect, the present application provides a pressure relief component applied to a battery cell, where the pressure relief component is provided with a score line, the score line extends along a closed trajectory and encloses a pressure relief region, the score line includes a first groove segment and a second groove segment, the first groove segment and the second groove segment are both arc segments, the first groove segment is curved toward a center point of the pressure relief region, and the second groove segment is curved away from the center point of the pressure relief region.

In the above technical solution, by providing the score line on the pressure relief component, where the score line extends along a closed trajectory and encloses the pressure relief region, the score line can be ruptured to relieve pressure when the internal pressure of the battery cell reaches a threshold value, which can reduce the possibility of the battery cell undergoing thermal runaway or even explosion. The score line includes the first groove segment and the second groove segment, and the first groove segment and the second groove segment are both arc segments, which can make the extension of the first groove segment and the second groove segment smooth and less likely to form stress concentration points, thereby reducing the possibility of premature cracking caused by stress concentration on the first groove segment and the second groove segment, and thus prolonging the service life of the battery cell. The first groove segment is curved toward the center point of the pressure relief region. As a result, when the internal pressure of the battery cell acts on the pressure relief component, the force borne by the first groove segment is smaller, which in turn reduces the possibility of deformation of the pressure relief region under force and the possibility of premature cracking of the score line, thus prolonging the service life of the battery cell. The second groove segment is curved away from the center point of the pressure relief region, which can increase the area of the pressure relief region, and after the score line is forced to rupture, a larger pressure relief channel can be formed, which facilitates the rapid pressure relief of the battery cell and further reduces the possibility of thermal runaway or even explosion of the battery cell.

According to some embodiments of the present application, an arc transition is formed between the first groove segment and the second groove segment.

In the above technical solution, by forming an arc transition between the first groove segment and the second groove segment, stress concentration points are less likely to form between the first groove segment and the second groove segment, thereby reducing the possibility of premature cracking caused by stress concentration on the first groove segment and the second groove segment, and thus prolonging the service life of the battery cell.

According to some embodiments of the present application, the score line further includes a third groove segment, the third groove segment and the first groove segment are spaced apart along a first direction, the second groove segment connects the first groove segment and the third groove segment, the third groove segment is an arc segment, and the third groove segment is curved toward the center point of the pressure relief region.

In the above technical solution, by providing the third groove segment, by making the third groove segment and the first groove segment spaced apart along the first direction, and the second groove segment connecting the first groove segment and the third groove segment, and by configuring the third groove segment as an arc segment, the third groove segment can extend smoothly and is less likely to form stress concentration points, thereby reducing the possibility of premature cracking caused by stress concentration on the third groove segment, and thus prolonging the service life of the battery cell. In addition, the third groove segment is curved toward the center point of the pressure relief region, which can make the force borne by the third groove segment smaller when the internal pressure of the battery cell acts on the pressure relief component, make the possibility of deformation of the pressure relief region under force smaller and the possibility of premature cracking of the score line smaller, and thus prolong the service life of the battery cell.

According to some embodiments of the present application, the first groove segment and the third groove segment are symmetrically arranged with respect to the center point of the pressure relief region.

In the above technical solution, by arranging the first groove segment and the third groove segment symmetrically about the center point of the pressure relief region, the force on the score line can be more uniform, the possibility of deformation of the pressure relief region under force is lower, the deformation resistance is higher, and the possibility of premature cracking of the score line is smaller, thereby prolonging the service life of the battery cell.

According to some embodiments of the present application, the score line further includes a fourth groove segment, the fourth groove segment and the second groove segment are spaced apart along a second direction, the first groove segment, the second groove segment, the third groove segment, and the fourth groove segment are connected end to end to form a closed ring, the fourth groove segment is an arc segment, and the fourth groove segment is curved away from the center point of the pressure relief region; where the second direction intersects the first direction.

In the above technical solution, by providing the fourth groove segment, by making the fourth groove segment and the second groove segment spaced apart along the second direction and the first groove segment, the second groove segment, the third groove segment, and the fourth groove segment connected end to end to form a closed ring, and by configuring the fourth groove segment as an arc segment, the fourth groove segment can extend smoothly and is less likely to form stress concentration points, thereby reducing the possibility of premature cracking caused by stress concentration on the fourth groove segment, and thus prolonging the service life of the battery cell. In addition, the fourth groove segment is curved away from the center point of the pressure relief region, which can increase the area of the pressure relief region, and after the score line is forced to rupture, a larger pressure relief channel can be formed, which facilitates the rapid pressure relief of the battery cell and further reduces the possibility of thermal runaway or even explosion of the battery cell.

According to some embodiments of the present application, the second direction is perpendicular to the first direction.

In the above technical solution, by configuring the first direction to be perpendicular to the second direction, the spacing direction of the first groove segment and the third groove segment is perpendicular to the spacing direction of the second groove segment and the fourth groove segment, which further makes the force distribution of the score line more uniform and the score line less likely to form stress concentration points. This can reduce the possibility of premature cracking caused by stress concentration on the score line, and prolong the service life of the battery cell.

According to some embodiments of the present application, the second groove segment and the fourth groove segment are symmetrically arranged with respect to the center point of the pressure relief region.

In the above technical solution, by arranging the second groove segment and the fourth groove segment symmetrically about the center point of the pressure relief region, the force on the score line can be more uniform, the possibility of deformation of the pressure relief region under force is lower, the deformation resistance is higher, and the possibility of premature cracking of the score line is smaller, thereby prolonging the service life of the battery cell.

According to some embodiments of the present application, the pressure relief component is provided with a countersink, and the score line is provided on a bottom wall of the countersink.

In the above technical solution, the pressure relief component is provided with the countersink, and the score line is provided on the bottom wall of the countersink, such that when the pressure relief component is subjected to the internal pressure of the battery cell, the bottom wall of the countersink is more prone to deformation compared to other parts of the pressure relief component. When the internal pressure of the battery cell reaches the threshold value, the score line can be cracked to form a pressure relief channel, achieving pressure relief of the battery cell.

According to some embodiments of the present application, the countersink is configured in a racetrack shape, a circular shape, or an elliptical shape.

In the above technical solution, the countersink is configured in a racetrack shape, a circular shape, or an elliptical shape, which can ensure the bottom wall of the countersink bears a uniform force when the pressure relief component is subjected to the internal pressure of the battery cell. In turn, the score line is uniformly stressed and less likely to form stress concentration points, which can reduce the possibility of premature cracking caused by stress concentration on the score line, and prolong the service life of the battery cell.

According to some embodiments of the present application, the countersink includes a first sidewall, a second sidewall, a third sidewall, and a fourth sidewall, where the first sidewall and the third sidewall are planar surfaces, the second sidewall and the fourth sidewall are arc surfaces, the first sidewall is located on an outer side of the first groove segment, the second sidewall is located on an outer side of the second groove segment, the third sidewall is located on an outer side of the third groove segment, and the fourth sidewall is located on an outer side of the fourth groove segment.

In the above technical solution, by configuring the first sidewall and the third sidewall as planar surfaces, the lengths of the first sidewall and the third sidewall can be set relatively long, thereby making the area of the countersink larger; and by configuring the second sidewall and the fourth sidewall as arc surfaces, a larger countersink area can be enclosed under the condition that the width of the countersink is limited, thereby making the area of the pressure relief region also larger. After the score line is forced to rupture, a larger pressure relief channel can be formed, which facilitates the rapid pressure relief of the battery cell and further reduces the possibility of thermal runaway or even explosion of the battery cell.

According to some embodiments of the present application, a distance between the first groove segment and the first sidewall increases gradually from both ends of the first groove segment toward the middle thereof; and
a distance between the third groove segment and the third sidewall increases gradually from both ends of the third groove segment toward the middle thereof.

In the above technical solution, by making the distance between the first groove segment and the first sidewall increase gradually from both ends of the first groove segment toward the middle thereof, and the distance between the third groove segment and the third sidewall increase gradually from both ends of the third groove segment toward the middle thereof, the first groove segment and the third groove segment can extend smoothly and are less likely to form stress concentration points, thereby reducing the possibility of premature cracking caused by stress concentration on the first groove segment and the third groove segment, and prolonging the service life of the battery cell.

According to some embodiments of the present application, along the first direction, a distance between the first sidewall and the third sidewall is W1, a maximum distance between the first groove segment and the first sidewall is W2, and a maximum distance between the third groove segment and the third sidewall is W3, satisfying 10%×W1≤W2≤70%×W1 and 10%×W1≤W3≤70%×W1.

In the above technical solution, by defining along the first direction that the distance between the first sidewall and the third sidewall W1, the maximum distance between the first groove segment and the first sidewall W2, and the maximum distance between the third groove segment and the third sidewall W3 satisfy 10%×W1≤W2≤70%×W1 and 10%×W1≤W3≤70%×W1, it is conducive to the fabrication of the score line, and makes the force borne by the first groove segment and the third groove segment from the inside of the battery cell smaller. Accordingly, the possibility of deformation of the pressure relief region under force is lower, the improvement in deformation resistance is more significant, the possibility of premature cracking of the score line smaller, thereby prolonging the service life of the battery cell.

According to some embodiments of the present application, along the first direction, a distance between the first sidewall and the third sidewall is W1, a maximum distance between the first groove segment and the first sidewall is W2, and a maximum distance between the third groove segment and the third sidewall is W3, satisfying W2+W3<W1.

In the above technical solution, by defining along the first direction that the distance between the first sidewall and the third sidewall W1, the maximum distance between the first groove segment and the first sidewall W2, and the maximum distance between the third groove segment and the third sidewall W3 satisfy W2+W3<W1, the first groove segment and the third groove segment are not connected, thereby reducing the problem of stress concentration and easy cracking at the connection due to the connection of the first groove segment and the third groove segment. This reduces the possibility of premature cracking of the score line and prolongs the service life of the battery cell.

According to some embodiments of the present application, the first groove segment includes a first sub-groove segment and a second sub-groove segment, where an included angle between a tangent to the first sub-groove segment and the first sidewall is α1, and an included angle between a tangent to the second sub-groove segment and the first sidewall is α2, satisfying 40°≤α1≤80° and 40°≤α2≤80°.

In the above technical solution, the first groove segment includes the first sub-groove segment and the second sub-groove segment. By configuring the included angle α1 between the tangent to the first sub-groove segment and the first sidewall and the included angle α2 between the tangent to the second sub-groove segment and the first sidewall to satisfy 40°≤α1≤80° and 40°≤α2≤80°, on one hand, the first groove segment can be further away from the first sidewall of the countersink, thereby further reducing the force borne by the first groove segment from the inside of the battery cell; on the other hand, the corner angle at the joints between the first sub-groove segment and the second sub-groove segment and other groove segments can be reduced. This in turn reduces the possibility of forming stress concentration points at the joints between the first sub-groove segment and the second sub-groove segment and other groove segments, and makes the possibility of deformation under force of the area enclosed by the score line lower, the deformation resistance higher, and the possibility of premature cracking of the score line smaller, thereby prolonging the service life of the battery cell.

According to some embodiments of the present application, a length of the second groove segment is L1, a length of the fourth groove segment is L2, and a length of the score line is L, satisfying L1≥1/4×L and L2≥1/4×L.

In the above technical solution, by defining the length L1 of the second groove segment, the length L2 of the fourth groove segment, and the length L of the score line to satisfy L1≥1/4×L and L2≥1/4×L, the length of the second groove segment that bears a larger force than the first groove segment in the score line can be longer, and the length of the fourth groove segment that bears a larger force than the third groove segment can be longer. When the internal pressure of the battery cell reaches the threshold value, the second groove segment and the fourth groove segment are likely to rupture for pressure relief, and the area of the pressure relief region becomes larger. After the score line is forced to rupture, a larger pressure relief channel can be formed, which facilitates the rapid pressure relief of the battery cell, and further reduces the possibility of thermal runaway or even explosion of the battery cell.

According to a second aspect, the present application provides a battery cell, including the pressure relief component as described above, where the pressure relief component is configured to release the internal pressure of the battery cell.

According to some embodiments of the present application, the battery cell further includes:
a housing having a wall portion;
where the pressure relief component is the wall portion.

In the above technical solution, the battery cell includes the housing, the housing has the wall portion, and the pressure relief component is the wall portion, such that when the pressure relief component opens, that is, part of the housing is opened, the internal pressure of the battery cell can be released.

According to some embodiments of the present application, the battery cell further includes:
a housing having a wall portion, the wall portion having a pressure relief hole;
where the pressure relief component is mounted on the wall portion and covers the pressure relief hole.

In the above technical solution, the housing has the wall portion, the wall portion has the pressure relief hole, and the pressure relief component is mounted on the wall portion and covers the pressure relief hole, which simplifies the fabrication and assembly of the pressure relief component.

According to some embodiments of the present application, the housing includes:
a casing, where an accommodating cavity with an opening is formed inside the casing, and the accommodating cavity is used for accommodating an electrode assembly;
an end cover closing the opening;
where the end cover is the wall portion.

In the above technical solution, the end cover is the wall portion, such that when the pressure relief component opens, that is, part of the end cover opens, the internal pressure of the battery cell can be released.

According to some embodiments of the present application, the housing includes:
a casing, where an accommodating cavity with an opening is formed inside the casing, and the accommodating cavity is used for accommodating an electrode assembly;
an end cover closing the opening;
where the casing includes the wall portion.

In the above technical solution, the casing includes the wall portion, such that when the pressure relief component opens, that is, part of the casing opens, the internal pressure of the battery cell can be released.

According to a third aspect, the present application provides a battery, including the battery cell as described above.

According to a fourth aspect, the present application provides an electric device, including the battery as described above, where the battery is configured to supply electrical energy.

### BRIEF DESCRIPTION OF DRAWINGS

In order to more clearly illustrate the technical solutions of the embodiments of the present application, the accompanying drawings to be used in the embodiments of the present application will be briefly introduced below. It should be understood that the following drawings only illustrate some embodiments of the present application, and therefore should not be regarded as limiting the scope. For those of ordinary skill in the art, other related drawings can be obtained based on these drawings without creative effort.
FIG. 1 is a schematic structural diagram of a vehicle according to some embodiments of the present application;
FIG. 2 is an exploded schematic structural diagram of a battery according to some embodiments of the present application;
FIG. 3 is an exploded schematic structural diagram of a battery cell according to some embodiments of the present application;
FIG. 4 is a schematic perspective structural diagram of a pressure relief component according to some embodiments of the present application;
FIG. 5 is a schematic structural diagram of a perspective of a pressure relief component according to some embodiments of the present application;
FIG. 6 is a schematic cross-sectional structural diagram of the pressure relief component in FIG. 5 along A-A;
FIG. 7 is a partial enlarged schematic structural diagram at B of the pressure relief component in FIG. 6;
FIG. 8 is a schematic perspective diagram of a partial structure of a pressure relief component according to some embodiments of the present application;
FIG. 9 is a schematic structural diagram of a perspective of a pressure relief component according to some embodiments of the present application;
FIG. 10 is a partial enlarged schematic structural diagram at C of the pressure relief component in FIG. 5; and
FIG. 11 is an exploded schematic structural diagram of a pressure relief component according to some other embodiments of the present application.

Reference signs: 1000-vehicle; 100-battery; 10-case; 11-first sub-case; 12-second sub-case; 20-battery cell; 21-housing; 211-end cover; 2111-electrode terminal; 212-casing; 22-electrode assembly; 221-tab; 23-pressure relief component; 231-score line; 2311-first groove segment; 2311a-first sub-groove segment; 2311b-second sub-groove segment; 2312-second groove segment; 2313-third groove segment; 2314-fourth groove segment; 232-countersink; 2321-first sidewall; 2322-second sidewall; 2323-third sidewall; 2324-fourth sidewall; 233-pressure relief hole; 200-controller; 300-motor; X-first direction; Y-second direction; and Z-third direction.

### DESCRIPTION OF EMBODIMENTS

In order to make the objectives, technical solutions, and advantages of the embodiments of the present application clearer, the technical solutions in the embodiments of the present application will be clearly described below in combination with the drawings in the embodiments of the present application. Obviously, the described embodiments are some embodiments of the present application, but not all embodiments. Based on the embodiments in the present application, all other embodiments obtained by those of ordinary skill in the art without creative effort belong to the protection scope of the present application.

Unless otherwise defined, all technical and scientific terms used in the present application have the same meanings as commonly understood by those of ordinary skill in the technical field of the present application; the terms used in the specification of the present application in the present application are only for the purpose of describing specific embodiments, and are not intended to limit the present application; and the terms "including" and "having" and any variations thereof in the specification and claims of the present application and the above description of the drawings are intended to cover non-exclusive inclusion.

The terms "first", "second", and the like in the specification and claims of the present application or the above drawings are used to distinguish different objects, and are not used to describe a specific order or primary-secondary relationship.

The mention of "an embodiment" in the present application means that specific features, structures, or characteristics described in combination with the embodiment can be included in at least one embodiment of the present application. The appearance of the phrase in various places in the specification does not necessarily refer to the same embodiment, nor is it an independent or alternative embodiment that is mutually exclusive with other embodiments.

"Multiple" appearing in the present application refers to more than two (including two).

The battery mentioned in the embodiments of the present application refers to a single physical module that includes a plurality of battery cells to provide higher voltage and capacity. For example, the battery mentioned in the present application may include a battery module, a battery pack, or the like. The battery may also generally include a case for packaging one or more battery cells or multiple battery modules. The case can prevent liquids or other foreign objects from affecting the charging or discharging of the battery cells.

The battery cell includes an electrode assembly and an electrolyte, where the electrode assembly is composed of a positive electrode sheet, a negative electrode sheet, and a separator. The battery cell mainly operates by movement of metal ions between the positive electrode sheet and the negative electrode sheet. The positive electrode sheet includes a positive electrode current collector and a positive electrode active material layer, where the positive electrode active material layer is applied on the surface of the positive electrode current collector, and the current collector not coated with the positive electrode active material layer serves as a positive electrode tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode sheet includes a negative electrode current collector and a negative electrode active material layer, where the negative electrode active material layer is applied on the surface of the negative electrode current collector, and the current collector not coated with the negative electrode active material layer serves as a negative electrode tab. The material of the negative electrode current collector may be copper, and the negative electrode active material may be carbon or silicon, or the like. In order to ensure that no fusing occurs when passing a large current, the positive electrode tab is provided in multiple, and the multiple positive electrode tab are stacked together; and the negative electrode tab is provided in multiple and the multiple negative electrode tab are stacked together. The material of the separator may be PP (polypropylene, polypropylene), PE (polyethylene, polyethylene), or the like.

The battery cell further includes a housing, where the housing has a wall portion, and the wall portion may be an end cover or at least part of the casing. The end cover closes the opening of the casing to define an accommodating space for accommodating the electrode assembly.

The battery has outstanding advantages such as high energy density, low environmental pollution, high power density, long service life, wide adaptation range, and low self-discharge factor, and is an important part of the development of new energy today. With the development of the new energy industry, batteries are gradually developing toward large-scale and integrated directions. The development of battery technology needs to consider multiple design factors at the same time, such as performance parameters including energy density, discharge capacity, and charge-discharge rate. In addition, the service life of the battery needs to be considered.

However, during operation of the battery cell, heat and gas are generated, resulting in an increase in the internal pressure of the battery cell. If the internal pressure of the battery cell cannot be released in time, problems such as thermal runaway or even explosion are likely to occur. Therefore, the battery cell can form a pressure relief channel when the internal pressure of the battery cell reaches a threshold value by providing a pressure relief mechanism, to release the internal pressure of the battery cell, so as to reduce the possibility of thermal runaway of the battery cell. The pressure relief mechanism may include a score line formed on the housing of the battery cell, but during the charging and discharging process of the battery cell, the internal pressure changes, and the area around the score line is prone to deformation under force. Moreover, in the repeated change process of the internal pressure of the battery cell becoming larger-smaller-larger, the area around the score line is also prone to repeated deformation, causing the region around the score line to be in a state of long-term breathing fatigue, which tends to cause premature cracking, thereby resulting in leakage of the battery cell, affecting the normal charging and discharging of the battery cell, and shortening the service life of the battery cell.

Based on the above considerations, the present application provides a pressure relief component applied to a battery cell, where the pressure relief component is provided with a score line, the score line extends along a closed trajectory and encloses a pressure relief region, the score line includes a first groove segment and a second groove segment, the first groove segment and the second groove segment are both arc segments, the first groove segment is curved toward the center point of the pressure relief region, and the second groove segment is curved away from the center point of the pressure relief region.

In the technical solution of the present application, by providing the score line on the pressure relief component, where the score line extends along a closed trajectory and encloses the pressure relief region, the score line can be ruptured to relieve pressure when the internal pressure of the battery cell reaches a threshold value, which can reduce the possibility of the battery cell undergoing thermal runaway or even explosion. The score line includes the first groove segment and the second groove segment, and the first groove segment and the second groove segment are both arc segments, which can make the extension of the first groove segment and the second groove segment smooth and less likely to form stress concentration points, thereby reducing the possibility of premature cracking caused by stress concentration on the first groove segment and the second groove segment, and thus prolonging the service life of the battery cell. The first groove segment is curved toward the center point of the pressure relief region. When the pressure relief component is subjected to force, the outer periphery of the pressure relief region is more prone to deformation and exhibits higher stress concentration, and the stress extends from the edge of the pressure relief region toward the center point of the pressure relief region. Accordingly, the part of the pressure relief region closer to the center point bears lower stress. As a result, when the internal pressure of the battery cell acts on the pressure relief component, the force borne by the first groove segment is smaller, which in turn reduces the possibility of deformation of the pressure relief region under force and the possibility of premature cracking of the score line, thus prolonging the service life of the battery cell. The second groove segment is curved away from the center point of the pressure relief region, which can increase the area of the pressure relief region, and after the score line is forced to rupture, a larger pressure relief channel can be formed, which facilitates the rapid pressure relief of the battery cell and further reduces the possibility of thermal runaway or even explosion of the battery cell.

The battery disclosed in the embodiments of the present application can but is not limited to be used in electric devices such as vehicles, ships, or aircraft. A power system of the electric device may be composed using the battery disclosed in the present application.

An embodiment of the present application provides an electric device using a battery as a power source, and the electric device may be but is not limited to electric tools, battery cars, electric vehicles, ships, and spacecraft. The electric toys may include fixed or mobile electric toys, such as game consoles, electric vehicle toys, electric ship toys, and electric aircraft toys, and the spacecraft may include airplanes, rockets, space shuttles, and spaceships, or the like.

The battery described in the embodiments of the present application is not only limited to the electric devices described above, but can also be applied to all electric devices requiring a battery power supply. For brevity of description, the following embodiments take a vehicle as an example of an electric device for illustration.

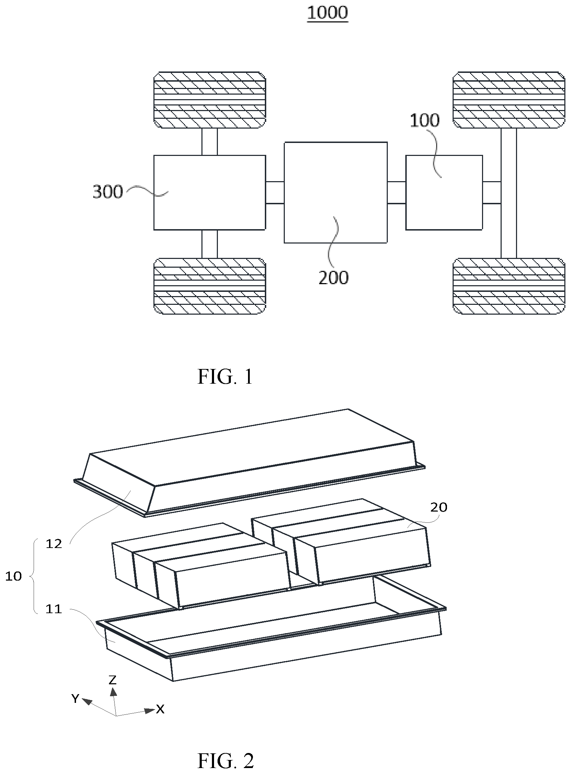

Referring to FIG. 1, FIG. 1 is a schematic structural diagram of a vehicle according to some embodiments of the present application. The vehicle 1000 may be a fuel vehicle, a gas vehicle, or a new energy vehicle, and the new energy vehicle may be a battery electric vehicle, a hybrid electric vehicle, an extended-range electric vehicle, or the like. A battery 100 is provided inside the vehicle 1000, and the battery 100 may be provided at the bottom, front, or rear of the vehicle 1000. The battery 100 may be used for power supply of the vehicle 1000, for example, the battery 100 may serve as an operating power source of the vehicle 1000 for the circuit system of the vehicle 1000, for example, to meet the operational power needs of starting, navigation, and inoperation of the vehicle 1000.

The vehicle 1000 may further include a controller 200 and a motor 300, where the controller 200 is configured to control the battery 100 to supply power to the motor 300, for example, to meet the operational power needs of starting, navigation, and driving of the vehicle 1000.

In some embodiments of the present application, the battery 100 can not only serve as an operating power source of the vehicle 1000, but also as a driving power source of the vehicle 1000, replacing or partially replacing fuel or natural gas to provide driving power for the vehicle 1000.

Referring to FIG. 2, FIG. 2 is an exploded schematic structural diagram of a battery according to some embodiments of the present application. The battery 100 includes a case 10 and a battery cell 20, and the battery cell 20 is accommodated in the case 10. The case 10 is configured to provide an accommodating space for the battery cell 20, and the case 10 can adopt multiple structures. In some embodiments, the case 10 may include a first sub-case 11 and a second sub-case 12, where the first sub-case 11 and the second sub-case 12 are covered with each other, and the first sub-case 11 and the second sub-case 12 together define an accommodating space for accommodating the battery cell 20. The first sub-case 11 may be a hollow structure with one end open, the second sub-case 12 may be a plate-like structure, and the second sub-case 12 is covered on the opening side of the first sub-case 11, such that the first sub-case 11 and the second sub-case 12 together define the accommodating space; the first sub-case 11 and the second sub-case 12 may also both be hollow structures with one side open, and the opening side of the second sub-case 12 is covered on the opening side of the first sub-case 11.

In some embodiments, the case 10 may be a rectangular parallelepiped.

In some other embodiments, the case 10 may also be a cylinder.

In some embodiments, the case 10 may be made of aluminum, aluminum alloy, or other metal materials, such that the case 10 has high load-bearing performance.

In some other embodiments, the case 10 may also be made of non-metallic materials with high strength, such as carbon fiber or rigid plastics.

In the battery 100, the battery cell 20 may be multiple, and the multiple battery cells 20 may be connected in series, in parallel, or in a series-parallel combination, where the in series-parallel combination refers to both series and parallel connections among multiple battery cells 20. Multiple battery cells 20 may be directly connected in series, in parallel, or in a series-parallel combination, and then the entirety formed by the multiple battery cells 20 is accommodated in the case 10. Certainly, the battery 100 may also first connect multiple battery cells 20 in series, in parallel, or in a series-parallel combination to form a battery module, and then multiple battery modules are connected in series, in parallel, or in a series-parallel combination to form an entirety, and accommodated in the case 10. The battery 100 may also include other structures, for example, the battery 100 may further include a busbar component for achieving electrical connection between a plurality of battery cells 20.

The battery cell 20 may be a secondary battery or a primary battery; and the battery cell 20 may alternatively be a lithium-sulfur battery, a sodium-ion battery, or a magnesium-ion battery, but is not limited thereto.

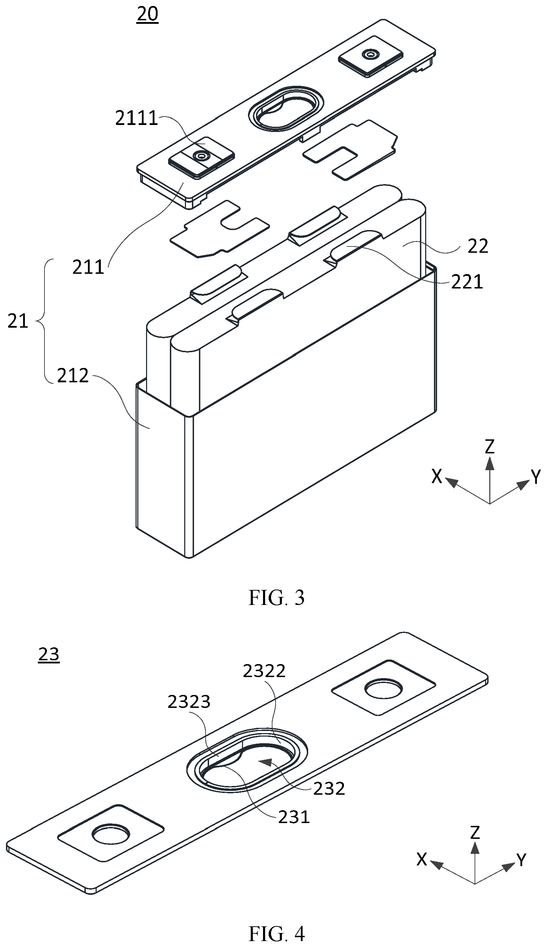

Referring to FIG. 3, FIG. 3 is an exploded schematic structural diagram of a battery cell according to some embodiments of the present application. As shown in FIG. 3, the battery cell 20 includes a housing 21, an electrode assembly 22, and other functional components.

The housing 21 includes an end cover 211 and a casing 212, where the casing 212 has an opening, and the end cover 211 closes the opening.

The end cover 211 refers to a component that covers the opening of the casing 212 to isolate the internal environment of the battery cell 20 from the external environment. Without limitation, the shape of the end cover 211 may be adapted to the shape of the casing 212 to cooperate with the casing 212. Optionally, the end cover 211 may be made of a material with a certain hardness and strength (such as aluminum alloy), such that the end cover 211 is less prone to deformation when subjected to extrusion or collision, enabling the battery cell 20 to have higher structural strength and improved safety performance. Functional components such as an electrode terminal 2111 may be provided on the end cover 211. The electrode terminal 2111 may be configured to electrically connect with the electrode assembly 22 for outputting or inputting electrical energy of the battery cell 20. The end cover 211 may also be made of various materials, such as copper, iron, aluminum, stainless steel, and aluminum alloy. In some embodiments, an insulating structure may alternatively be provided on the inner side of the end cover 211, and the insulating structure may be configured to isolate electrical connection components in the casing 212 from the end cover 211, so as to reduce the risk of short circuit. Exemplarily, the insulating structure may be plastic, rubber, or the like.

The casing 212 is a component used to cooperate with the end cover 211 to form the internal environment of the battery cell 20, where the formed internal environment may be used to accommodate the electrode assembly 22, the electrolyte, and other components. The casing 212 and the end cover 211 may be independent components. The casing 212 may have various shapes and sizes. Specifically, the shape of the casing 212 may be determined according to the specific shape and size of the electrode assembly 22. The casing 212 may be made of various materials, such as copper, iron, aluminum, stainless steel, and aluminum alloy.

In some embodiments, the casing 212 may be a hollow structure with one side open, and the end cover 211 may be provided in a flat plate shape, and covers the opening of the casing 212.

In some other embodiments, both the end cover 211 and the casing 212 may be hollow structures with one side open, and the opening side of the end cover 211 is covered on the opening side of the casing 212 to jointly form an accommodating space.

In some embodiments, the end cover 211 and the casing 212 may be connected by welding.

In some other embodiments, the end cover 211 and the casing 212 may also be fixedly connected by bonding, interference fit, or other methods.

In some embodiments, the battery cell 20 may be in a rectangular parallelepiped shape, such that multiple battery cells 20 may be arranged closely in a matrix, which helps to increase the energy density of the battery 100.

In some other embodiments, the battery cell 20 may alternatively be in a flat shape, a cylindrical shape, or other shapes.

The electrode assembly 22 is a component in the battery cell 20 where electrochemical reactions occur. One or more electrode assemblies 22 may be included in the casing 212. The electrode assembly 22 is mainly formed by winding or stacking a positive electrode sheet and a negative electrode sheet, and a separator is usually disposed between the positive electrode sheet and the negative electrode sheet, and the separator is configured to separate the positive electrode sheet and the negative electrode sheet to prevent short circuit between the positive electrode sheet and the negative electrode sheet. The parts of the positive electrode sheet and the negative electrode sheet having active materials constitute the main body of the electrode assembly 22, and the parts of the positive electrode sheet and the negative electrode sheet not having active materials constitute tabs 221, respectively. The positive electrode tab and the negative electrode tab may be located together at one end of the main body or respectively at both ends of the main body. During the charging and discharging process of the battery, the positive electrode active material and the negative electrode active material react with the electrolyte, and the tab 221 connects to the electrode terminal 2111 to form a current loop.

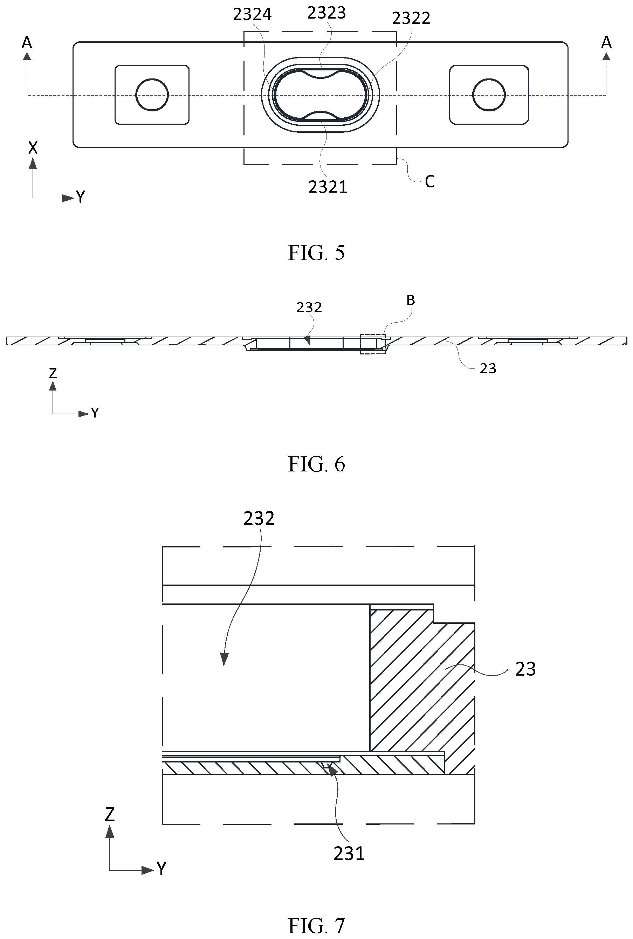

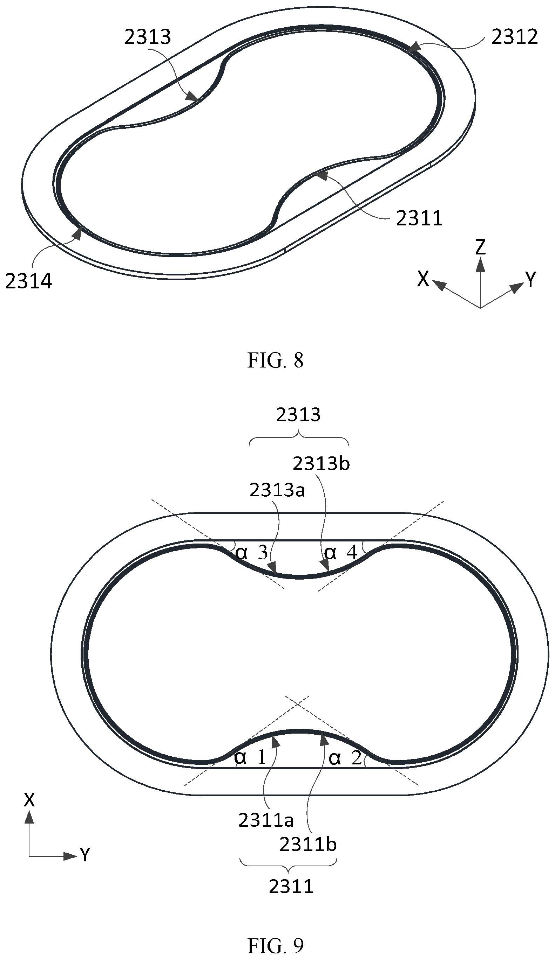

Referring to FIG. 4 to FIG. 8, FIG. 4 is a schematic perspective structural diagram of a pressure relief component according to some embodiments of the present application; FIG. 5 is a schematic structural diagram of a perspective of a pressure relief component according to some embodiments of the present application; FIG. 6 is a schematic cross-sectional structural diagram of the pressure relief component in FIG. 5 along A-A; FIG. 7 is a partial enlarged schematic structural diagram at B of the pressure relief component in FIG. 6; and FIG. 8 is a schematic perspective diagram of a partial structure of a pressure relief component according to some embodiments of the present application.

An embodiment of the present application provides a pressure relief component 23 applied to a battery cell 20, where the pressure relief component 23 is provided with a score line 231, the score line 231 extends along a closed trajectory and encloses a pressure relief region, the score line 231 includes a first groove segment 2311 and a second groove segment 2312, the first groove segment 2311 and the second groove segment 2312 are both arc segments, the first groove segment 2311 is curved toward the center point of the pressure relief region, and the second groove segment 2312 is curved away from the center point of the pressure relief region.

The pressure relief component 23 is a component constituting the housing of the battery cell 20.

By providing the score line 231 on the pressure relief component 23, where the score line 231 extends along a closed trajectory and encloses the pressure relief region, the score line 231 can be ruptured to relieve pressure when the internal pressure of the battery cell 20 reaches a threshold value, which can reduce the possibility of the battery cell 20 undergoing thermal runaway or even explosion. The score line 231 includes the first groove segment 2311 and the second groove segment 2312, and the first groove segment 2311 and the second groove segment 2312 are both arc segments, which can make the extension of the first groove segment 2311 and the second groove segment 2312 smooth and less likely to form stress concentration points, thereby reducing the possibility of premature cracking caused by stress concentration on the first groove segment 2311 and the second groove segment 2312, and thus prolonging the service life of the battery cell 20. The first groove segment 2311 is curved toward the center point of the pressure relief region. When the pressure relief component 23 is subjected to force, the outer periphery of the pressure relief region is more prone to deformation and exhibits higher stress concentration, and the stress extends from the edge of the pressure relief region toward the center point of the pressure relief region. Accordingly, the part of the pressure relief region closer to the center point bears lower stress. As a result, when the internal pressure of the battery cell 20 acts on the pressure relief component 23, the force borne by the first groove segment 2311 is smaller, which in turn reduces the possibility of deformation of the pressure relief region under force and the possibility of premature cracking of the score line 231, thus prolonging the service life of the battery cell 20. The second groove segment 2312 is curved away from the center point of the pressure relief region, which can increase the area of the pressure relief region, and after the score line 231 is forced to rupture, a larger pressure relief channel can be formed, which facilitates the rapid pressure relief of the battery cell 20 and further reduces the possibility of thermal runaway or even explosion of the battery cell 20.

According to some embodiments of the present application, an arc transition is formed between the first groove segment 2311 and the second groove segment 2312. That is, the joint between the first groove segment 2311 and the second groove segment 2312 is configured in an arc shape.

By forming an arc transition between the first groove segment 2311 and the second groove segment 2312, stress concentration points are less likely to form between the first groove segment 2311 and the second groove segment 2312, thereby reducing the possibility of premature cracking caused by stress concentration at the joint between the first groove segment 2311 and the second groove segment 2312, and thus prolonging the service life of the battery cell 20.

According to some embodiments of the present application, the score line 231 further includes a third groove segment 2313, the third groove segment 2313 and the first groove segment 2311 are spaced apart along a first direction X, the second groove segment 2312 connects the first groove segment 2311 and the third groove segment 2313, the third groove segment 2313 is an arc segment, and the third groove segment 2313 is curved toward the center point of the pressure relief region.

By providing the third groove segment 2313, and by making the third groove segment 2313 and the first groove segment 2311 spaced apart along the first direction X, the distribution of the score line 231 can be more uniform, the possibility of the score line 231 generating stress concentration points is lower, and the possibility of premature cracking of the score line 231 is lower, thereby prolonging the service life of the battery cell 20. The second groove segment 2312 connects the first groove segment 2311 and the third groove segment 2313, and the third groove segment 2313 is an arc segment, which can make the extension of the third groove segment 2313 smooth and is less likely to form stress concentration points, thereby reducing the possibility of premature cracking caused by stress concentration on the third groove segment 2313, and thus prolonging the service life of the battery cell 20. In addition, the third groove segment 2313 is curved toward the center point of the pressure relief region, which can make the force borne by the third groove segment 2313 smaller when the internal pressure of the battery cell 20 acts on the pressure relief component 23, make the possibility of deformation of the pressure relief region under force smaller and the possibility of premature cracking of the score line 231 smaller, and prolong the service life of the battery cell 20.

According to some embodiments of the present application, an arc transition is formed between the second groove segment 2312 and the third groove segment 2313, which can make the transition part between the second groove segment 2312 and the third groove segment 2313 smooth and less likely to form stress concentration points, thereby reducing the possibility of premature cracking due to stress concentration at the joint between the second groove segment 2312 and the third groove segment 2313, and prolonging the service life of the battery cell 20.

Referring to FIG. 9 together, FIG. 9 is a schematic structural diagram of a perspective of a pressure relief component according to some embodiments of the present application.

According to some embodiments of the present application, the first groove segment 2311 and the third groove segment 2313 are symmetrically arranged with respect to the center point of the pressure relief region.

The center point of the pressure relief region may be the geometric center point of the pressure relief region.

By arranging the first groove segment 2311 and the third groove segment 2313 symmetrically about the center point of the pressure relief region, the force on the score line 231 can be more uniform, the possibility of deformation of the pressure relief region under force is lower, the deformation resistance is higher, the possibility of premature cracking of the score line 231 is smaller, thereby prolonging the service life of the battery cell 20.

According to some embodiments of the present application, the score line 231 further includes a fourth groove segment 2314, the fourth groove segment 2314 and the second groove segment 2312 are spaced apart along a second direction Y, the first groove segment 2311, the second groove segment 2312, the third groove segment 2313, and the fourth groove segment 2314 are connected end to end to form a closed ring, the fourth groove segment 2314 is an arc segment, and the fourth groove segment 2314 is curved away from the center point of the pressure relief region; the second direction Y intersects the first direction X.

By providing the fourth groove segment 2314, and by making the fourth groove segment 2314 and the second groove segment 2312 spaced apart along the second direction Y, the distribution of the score line 231 can be more uniform, the possibility of the score line 231 generating stress concentration points is lower, and the possibility of premature cracking of the score line 231 is lower, thereby prolonging the service life of the battery cell 20. The first groove segment 2311, the second groove segment 2312, the third groove segment 2313, and the fourth groove segment 2314 are connected end to end to form a closed ring. When the battery cell 20 generates thermal runaway, the score line 231 can be ruptured, and the pressure relief region can be separated from other areas of the pressure relief component 23, forming a pressure relief channel with a larger area, which facilitates the rapid pressure relief of the battery cell 20 and further reduces the possibility of thermal runaway or even explosion of the battery cell 20. The fourth groove segment 2314 is an arc segment, which can make the extension of the fourth groove segment 2314 smooth and less likely to form stress concentration points, thereby reducing the possibility of premature cracking caused by stress concentration on the fourth groove segment 2314, and thus prolonging the service life of the battery cell 20. In addition, the fourth groove segment 2314 is curved away from the center point of the pressure relief region, which can increase the area of the pressure relief region, and after the score line 231 is forced to rupture, a larger pressure relief channel can be formed, which facilitates the rapid pressure relief of the battery cell 20 and further reduces the possibility of thermal runaway or even explosion of the battery cell 20.

According to some embodiments of the present application, an arc transition is formed between the third groove segment 2313 and the fourth groove segment 2314 and between the fourth groove segment 2314 and the first groove segment 2311, which can make the transition parts between the third groove segment 2313 and the fourth groove segment 2314 and between the fourth groove segment 2314 and the first groove segment 2311 smooth and less likely to form stress concentration points, thereby reducing the possibility of premature cracking caused by stress concentration at the joints between the third groove segment 2313 and the fourth groove segment 2314 and at the joints between the fourth groove segment 2314 and the first groove segment 2311, and prolonging the service life of the battery cell 20.

According to some embodiments of the present application, the second direction Y is perpendicular to the first direction X.

By configuring the first direction X to be perpendicular to the second direction Y, the spacing direction of the first groove segment 2311 and the third groove segment 2313 is perpendicular to the spacing direction of the second groove segment 2312 and the fourth groove segment 2314, which further makes the force distribution of the score line 231 more uniform, the score line 231 is less likely to form stress concentration points. This can reduce the possibility of premature cracking caused by stress concentration on the score line 231, and prolong the service life of the battery cell 20.

According to some embodiments of the present application, the first direction X, the second direction Y, and the third direction Z are pairwise perpendicular. The first direction X is parallel to a width direction of the pressure relief component 23, the second direction Y is parallel to a length direction of the pressure relief component 23, and the third direction Z is parallel to a thickness direction of the pressure relief component 23.

According to some embodiments of the present application, the second groove segment 2312 and the fourth groove segment 2314 are symmetrically arranged with respect to the center point of the pressure relief region.

By arranging the second groove segment 2312 and the fourth groove segment 2314 symmetrically about the center point of the pressure relief region, the force on the score line 231 can be more uniform, the possibility of deformation of the pressure relief region under force is lower, the deformation resistance is higher, and the possibility of premature cracking of the score line 231 is smaller, thereby prolonging the service life of the battery cell 20.

According to some embodiments of the present application, depths of the first groove segment 2311, the second groove segment 2312, and the fourth groove segment 2314 are greater than a depth of the third groove segment 2313.

The depth of the score line 231 is a dimension of the score line 231 in the third direction Z.

By defining the depths of the first groove segment 2311, the second groove segment 2312, and the fourth groove segment 2314 to be greater than the depth of the third groove segment 2313, the first groove segment 2311, the second groove segment 2312, and the fourth groove segment 2314 can be forced to rupture prior to the second groove segment 2312, forming a pressure relief channel. In addition, the region enclosed by the score line 231 of the pressure relief component 23 is kept connected to other regions, which reduces the possibility of damage caused by interference with other components after the region enclosed by the score line 231 is separated from other regions.

In some other embodiments, it may also be that the depths of other three groove segments among the first groove segment 2311, the second groove segment 2312, the third groove segment 2313, and the fourth groove segment 2314 are greater than the depth of the other groove segment, for example, the depths of the first groove segment 2311, the second groove segment 2312, and the third groove segment 2313 are greater than the depth of the fourth groove segment 2314.

In some other embodiments, it may also be that the depths of two connected groove segments among the first groove segment 2311, the second groove segment 2312, the third groove segment 2313, and the fourth groove segment 2314 are greater than the depths of the other two groove segments, for example, the depths of the first groove segment 2311 and the second groove segment 2312 are greater than the depths of the third groove segment 2313 and the fourth groove segment 2314.

In some other embodiments, it may also be that the depth of one groove segment among the first groove segment 2311, the second groove segment 2312, the third groove segment 2313, and the fourth groove segment 2314 is greater than the depths of the other three groove segments, for example, the depth of the first groove segment 2311 is greater than the depths of the second groove segment 2312, the third groove segment 2313, and the fourth groove segment 2314.

In some other embodiments, the depths of multiple groove segments that are greater than the depth of other groove segments may be the same or different. For example, under the condition that the depths of the first groove segment 2311, the second groove segment 2312, and the fourth groove segment 2314 are greater than the depth of the third groove segment 2313, the depths of the first groove segment 2311, the second groove segment 2312, and the fourth groove segment 2314 may also be different. For example, the depth of the first groove segment 2311 is greater than the depth of the fourth groove segment 2314, and the depth of the second groove segment 2312 is greater than the depth of the first groove segment 2311, such that the second groove segment 2312, the first groove segment 2311, the fourth groove segment 2314, and the third groove segment 2313 can be ruptured in sequence when the internal pressure of the battery cell 20 reaches the threshold value. In addition, a greater internal pressure of the battery cell 20 indicates more ruptured groove segments, and thus a larger area of the formed pressure relief channel indicates a faster pressure relief speed.

According to some embodiments of the present application, the pressure relief component 23 is provided with a countersink 232, and the score line 231 is provided on a bottom wall of the countersink 232.

The bottom wall of the countersink 232 is disposed opposite the opening of the countersink 232, and the sidewall of the countersink 232 refers to the wall surrounding the bottom wall of the countersink 232.

The pressure relief component 23 is provided with the countersink 232, and the score line 231 is disposed on the bottom wall of the countersink 232, such that when the pressure relief component 23 is subjected to the internal pressure of the battery cell 20, the bottom wall of the countersink 232 is more prone to deformation compared to other parts of the pressure relief component 23. Therefore, when the internal pressure of the battery cell 20 reaches the threshold value, the score line 231 can crack to form a pressure relief channel, achieving pressure relief of the battery cell 20.

According to some embodiments of the present application, the countersink 232 is configured in a racetrack shape.

In some other embodiments, the countersink 232 may also be provided in other shapes such as circular or elliptical.

The countersink 232 is configured in a racetrack shape, a circular shape, or an elliptical shape, which can ensure the bottom wall of the countersink 232 bears a uniform force when the pressure relief component 23 is subjected to the internal pressure of the battery cell 20. In turn, the score line 231 is uniformly stressed and less likely to form stress concentration points, which can reduce the possibility of premature cracking caused by stress concentration on the score line 231, and prolong the service life of the battery cell 20.

According to some embodiments of the present application, the countersink 232 includes a first sidewall 2321, a second sidewall 2322, a third sidewall 2323, and a fourth sidewall 2324, where the first sidewall 2321 and the third sidewall 2323 are planar surfaces, the second sidewall 2322 and the fourth sidewall 2324 are arc surfaces, the first sidewall 2321 is located on an outer side of the first groove segment 2311, the second sidewall 2322 is located on an outer side of the second groove segment 2312, the third sidewall 2323 is located on an outer side of the third groove segment 2313, and the fourth sidewall 2324 is located on an outer side of the fourth groove segment 2314.

The outer side of the first groove segment 2311 refers to the side of the first groove segment 2311 facing away from the center of the pressure relief region, the outer side of the second groove segment 2312 refers to the side of the second groove segment 2312 facing away from the center of the pressure relief region, the outer side of the third groove segment 2313 refers to the side of the third groove segment 2313 facing away from the center of the pressure relief region, and the outer side of the fourth groove segment 2314 refers to the side of the fourth groove segment 2314 facing away from the center of the pressure relief region.

Since the pressure relief component 23 provided in some embodiments of the present application is rectangular, a width of the pressure relief component 23 along the first direction X is relatively narrow, while a length of the pressure relief component 23 along the second direction Y is relatively long. This results in a limited dimension of the countersink 232 provided on the pressure relief component 23 along the first direction X, while the dimension along the second direction Y can be set larger. Therefore, by configuring the first sidewall 2321 and the third sidewall 2323 as planar surfaces, the lengths of the first sidewall 2321 and the third sidewall 2323 can be set longer, making the area of the countersink 232 larger. By configuring the second sidewall 2322 and the fourth sidewall 2324 as arc surfaces, a larger area of the countersink 232 can be enclosed under the condition that the width of the countersink 232 is limited, thereby making the area of the pressure relief region also larger. After the score line 231 is forced to rupture, a larger pressure relief channel can be formed, which facilitates the rapid pressure relief of the battery cell 20 and further reduces the possibility of thermal runaway or even explosion of the battery cell 20.

In some other embodiments, the first sidewall 2321 and the third sidewall 2323 may alternatively be arc surfaces, and the second sidewall 2322 and the fourth sidewall 2324 may alternatively be planar surfaces.

In some other embodiments, the first sidewall 2321, the second sidewall 2322, the third sidewall 2323, and the fourth sidewall 2324 may be set as arc surfaces or planar surfaces according to the shape of the pressure relief component 23.

According to some embodiments of the present application, a distance between the first groove segment 2311 and the first sidewall 2321 increases gradually from both ends of the first groove segment 2311 toward the middle thereof; and a distance between the third groove segment 2313 and the third sidewall 2323 increases gradually from both ends of the third groove segment 2313 toward the middle thereof.

The distance between the first groove segment 2311 and the first sidewall 2321 is the distance between the first groove segment 2311 and the first sidewall 2321 along the first direction X. The distance between the third groove segment 2313 and the third sidewall 2323 is the distance between the third groove segment 2313 and the third sidewall 2323 along the first direction X.

By making the distance between the first groove segment 2311 and the first sidewall 2321 increase gradually from both ends of the first groove segment 2311 toward the middle thereof, and the distance between the third groove segment 2313 and the third sidewall 2323 increase gradually from both ends of the third groove segment 2313 toward the middle thereof, the first groove segment 2311 and the third groove segment 2313 can extend smoothly and are less likely to form stress concentration points, thereby reducing the possibility of premature cracking caused by stress concentration on the first groove segment 2311 and the third groove segment 2313, and prolonging the service life of the battery cell 20.

In some other embodiments, the distance between the first groove segment 2311 and the first sidewall 2321 may increase partially gradually from both ends of the first groove segment 2311 toward the middle thereof and partially remain unchanged, that is, the first groove segment 2311 may partially extend in a direction away from the first sidewall 2321 and partially extend in a direction parallel to the first sidewall 2321.

In some other embodiments, the distance between the first groove segment 2311 and the first sidewall 2321 may increase gradually from one end of the first groove segment 2311 toward the middle thereof, and the distance between the other end of the first groove segment 2311 and the first sidewall 2321 remains unchanged.

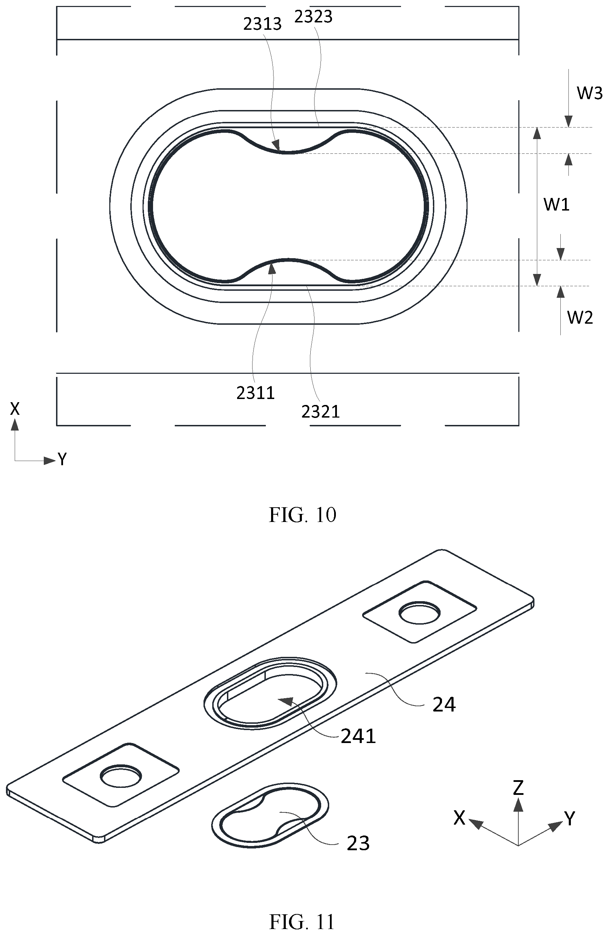

Referring to FIG. 10 together, FIG. 10 is a partial enlarged schematic structural diagram at C of the pressure relief component in FIG. 5.

According to some embodiments of the present application, along the first direction X, a distance between the first sidewall 2321 and the third sidewall 2323 is W1, a maximum distance between the first groove segment 2311 and the first sidewall 2321 is W2, and a maximum distance between the third groove segment 2313 and the third sidewall 2323 is W3, satisfying 10%×W1≤W2≤70%×W1, 10%×W1≤W3≤70%×W1, for example, W2 may be 10%×W1, 40%×W1, 70%×W1, or the like, and W3 may be 10%×W1, 35%×W1, 70%×W1, or the like.

By defining along the first direction X that the distance between the first sidewall 2321 and the third sidewall 2323 W1, the maximum distance between the first groove segment 2311 and the first sidewall 2321 W2, and the maximum distance between the third groove segment 2313 and the third sidewall 2323 W3 satisfy 10%×W1≤W2≤70%×W1 and 10%×W1≤W3≤70%×W1, it is conducive to the fabrication of the score line 231, and makes the force borne by the first groove segment 2311 and the third groove segment 2313 from the inside of the battery cell 20 smaller. Accordingly, the possibility of deformation of the pressure relief region under force is lower, the improvement in deformation resistance is more significant, the possibility of premature cracking of the score line 231 smaller, thereby prolonging the service life of the battery cell 20.

According to some embodiments of the present application, along the first direction X, a distance between the first sidewall 2321 and the third sidewall 2323 is W1, a maximum distance between the first groove segment 2311 and the first sidewall 2321 is W2, and a maximum distance between the third groove segment 2313 and the third sidewall 2323 is W3, satisfying W2+W3<W1.

By defining along the first direction X that the distance between the first sidewall 2321 and the third sidewall 2323 W1, the maximum distance between the first groove segment 2311 and the first sidewall 2321 W2, and the maximum distance between the third groove segment 2313 and the third sidewall 2323 W3 satisfy W2+W3<W1, the first groove segment 2311 and the third groove segment 2313 are not connected, thereby reducing the problem of stress concentration and easy cracking at the connection due to the connection of the first groove segment 2311 and the third groove segment 2313. This reduces the possibility of premature cracking of the score line 231 and prolongs the service life of the battery cell 20.

According to some embodiments of the present application, the first groove segment 2311 includes a first sub-groove segment 2311a and a second sub-groove segment 2311b, where an included angle between a tangent to the first sub-groove segment 2311a and the first sidewall 2321 is α1, and an included angle between a tangent to the second sub-groove segment 2311b and the first sidewall 2321 is α2, satisfying 40°≤α1≤80° and 40°≤α2≤80°, for example, α1 may be 40°, 60°, 80°, or the like, and α2 may be 40°, 55°, 80°, or the like.

The first groove segment 2311 includes the first sub-groove segment 2311a and the second sub-groove segment 2311b. By configuring the included angle α1 between a tangent to the first sub-groove segment 2311a and the first sidewall 2321 and the included angle α2 between a tangent to the second sub-groove segment 2311b and the first sidewall 2321 to satisfy 40°≤α1≤80°, 40°≤α2≤80°, on one hand, the first groove segment 2311 can be further away from the first sidewall 2321 of the countersink 232, thereby further reducing the force borne by the first groove segment 2311 from the inside of the battery cell; on the other hand, the corner angle at the joints between the first sub-groove segment 2311a and the second sub-groove segment 2311b and other groove segments can be reduced. This in turn reduces the possibility of forming stress concentration points at the joints between the first sub-groove segment 2311a and the second sub-groove segment 2311b and other groove segments, and makes the possibility of deformation under force of the area enclosed by the score line 231 lower, the deformation resistance higher, and the possibility of premature cracking of the score line 231 smaller, thereby prolonging the service life of the battery cell 20.

According to some embodiments of the present application, the third groove segment 2313 includes a third sub-groove segment 2313a and a fourth sub-groove segment 2313b, where an included angle between a tangent to the third sub-groove segment 2313a and the third sidewall 2323 is α3, and an included angle between a tangent to the fourth sub-groove segment 2313b and the third sidewall 2323 is α4, satisfying 40°≤α3≤80° and 40°≤α4≤80°, for example, α3 may be 40°, 65°, 80°, or the like, and α4 may be 40°, 50°, 80°, or the like.

By configuring the included angle α3 between a tangent to the third sub-groove segment 2313a and the third sidewall 2323, and the included angle α4 between a tangent to the fourth sub-groove segment 2313b and the third sidewall 2323 to satisfy 40°≤α3≤80° and 40°≤α4≤80°, on one hand, the third groove segment 2313 can be further away from the third sidewall 2323 of the countersink 232, thereby further reducing the force borne by the third groove segment 2313 from the inside of the battery cell; on the other hand, the corner angle at the joints between the third sub-groove segment 2313a and the fourth sub-groove segment 2313b and other groove segments can be reduced. This in turn reduces the possibility of forming stress concentration points at the joints between the third sub-groove segment 2313a and the fourth sub-groove segment 2313b and other groove segments, and makes the possibility of deformation under force of the area enclosed by the score line 231 smaller, the deformation resistance stronger, and the possibility of premature cracking of the score line 231 smaller, thereby prolonging the service life of the battery cell 20.

According to some embodiments of the present application, a length of the second groove segment 2312 is L1, a length of the fourth groove segment 2314 is L2, and a length of the score line 231 is L, satisfying L1≥1/4×L and L2≥1/4×L, for example, L1 may be 1/4×L, 1/3×L, 2/5×L, or the like, and L2 may be 1/4×L, 1/3×L, or 2/5×L, or the like.

By defining the length L1 of the second groove segment 2312, the length L2 of the fourth groove segment 2314, and the length L of the score line 231 to satisfy L1≥1/4×L and L2≥1/4×L, the length of the second groove segment 2312 that bears a larger force than the first groove segment 2311 in the score line 231 can be longer, and the length of the fourth groove segment 2314 that bears a larger force than the third groove segment 2313 can be longer. When the internal pressure of the battery cell 20 reaches the threshold value, the second groove segment 2312 and the fourth groove segment 2314 are likely to rupture for pressure relief, and the area of the pressure relief region becomes larger. After the score line 231 is forced to rupture, a larger pressure relief channel can be formed, which facilitates the rapid pressure relief of the battery cell 20, and further reduces the possibility of thermal runaway or even explosion of the battery cell 20.

Referring to FIG. 3 and FIG. 4, an embodiment of the present application provides a battery cell 20, including the pressure relief component 23 provided in any of the above embodiments, and the pressure relief component 23 is configured to release the internal pressure of the battery cell 20.

According to some embodiments of the present application, the battery cell 20 further includes a housing 21, where the housing 21 has a wall portion, and the pressure relief component 23 is the wall portion. That is, the score line 231 and the countersink 232 are directly formed on the wall portion.

The battery cell 20 includes the housing 21, where the housing 21 has the wall portion, and the pressure relief component 23 is the wall portion. Thus, when the pressure relief component 23 opens, that is, part of the housing 21 opens, the internal pressure of the battery cell 20 can be released.

Referring to FIG. 11, FIG. 11 is an exploded schematic structural diagram of a pressure relief component according to some other embodiments of the present application. Another embodiment of the present application provides a battery cell 20, including the pressure relief component 23 provided in any of the above embodiments and a housing 21, where the pressure relief component 23 is configured to release the internal pressure of the battery cell 20. The housing 21 has a wall portion 24, the wall portion 24 has a pressure relief hole 241, and the pressure relief component 23 is mounted on the wall portion 24 and covers the pressure relief hole 241. The fabrication and assembly of the pressure relief component 23 are simple.

According to some embodiments of the present application, the housing 21 includes an end cover 211 and a casing 212, where an accommodating cavity with an opening is formed inside the casing 212, the accommodating cavity is used for accommodating an electrode assembly 22, the end cover 211 closes the opening, and the end cover 211 is the wall portion of the battery cell 20 provided in any of the above embodiments.

The end cover 211 is the wall portion. Thus, when the pressure relief component 23 ruptures, that is, part of the end cover 211 ruptures, the internal pressure of the battery cell 20 can be released.

According to some embodiments of the present application, the housing 21 includes an end cover 211 and a casing 212, where an accommodating cavity with an opening is formed inside the casing 212, the accommodating cavity is used for accommodating an electrode assembly 22, the end cover 211 closes the opening, and the casing 212 includes the wall portion of the battery cell 20 provided in any of the above embodiments.

The casing 212 includes the wall portion. Thus, when the pressure relief component 23 ruptures, that is, part of the casing 212 ruptures, the internal pressure of the battery cell 20 can be released.

Referring to FIG. 2, according to some embodiments of the present application, an embodiment of the present application further provides a battery 100, including the battery cell 20 according to any one of the above embodiments.

According to some embodiments of the present application, an embodiment of the present application further provides an electric device, including the battery 100 according to any one of the above embodiments.

Referring to FIG. 3 to FIG. 11, an embodiment of the present application provides a pressure relief component 23, where the pressure relief component 23 is provided with a score line 231, and the score line 231 extends along a closed trajectory and encloses a pressure relief region. The score line 231 includes a first groove segment 2311, a second groove segment 2312, a third groove segment 2313, and a fourth groove segment 2314, where the first groove segment 2311, the second groove segment 2312, the third groove segment 2313, and the fourth groove segment 2314 are connected end to end to form a closed ring. The first groove segment 2311 and the third groove segment 2313 are spaced apart along a first direction X, and the second groove segment 2312 and the fourth groove segment 2314 are spaced apart along a second direction Y. The first groove segment 2311, the second groove segment 2312, the third groove segment 2313, and the fourth groove segment 2314 are all arc segments, the first groove segment 2311 and the third groove segment 2313 are curved toward the center point of the pressure relief region, and the first groove segment 2311 and the third groove segment 2313 are symmetrically arranged with respect to the center point of the pressure relief region. The second groove segment 2312 and the fourth groove segment 2314 are curved away from the center point of the pressure relief region. In addition, the second groove segment 2312 and the fourth groove segment 2314 are symmetrically arranged with respect to the center point of the pressure relief region. An arc transition is formed between the first groove segment 2311 and the second groove segment 2312, between the second groove segment 2312 and the third groove segment 2313, between the third groove segment 2313 and the fourth groove segment 2314, and between the fourth groove segment 2314 and the first groove segment 2311.

The pressure relief component 23 is provided with a countersink 232, and the score line 231 is provided on a bottom wall of the countersink 232. The countersink 232 is configured in a racetrack shape. The countersink 232 includes a first sidewall 2321, a second sidewall 2322, a third sidewall 2323, and a fourth sidewall 2324, where the first sidewall 2321 and the third sidewall 2323 are planar surfaces, the second sidewall 2322 and the fourth sidewall 2324 are arc surfaces, the first sidewall 2321 is located on an outer side of the first groove segment 2311, the second sidewall 2322 is located on an outer side of the second groove segment 2312, the third sidewall 2323 is located on an outer side of the third groove segment 2313, and the fourth sidewall 2324 is located on an outer side of the fourth groove segment 2314.

From both ends of the first groove segment 2311 toward the middle, a distance between the first groove segment 2311 and the first sidewall 2321 gradually increases. From both ends of the third groove segment 2313 toward the middle, a distance between the third groove segment 2313 and the third sidewall 2323 gradually increases.

Along the first direction X, a distance between the first sidewall 2321 and the third sidewall 2323 is W1, a maximum distance between the first groove segment 2311 and the first sidewall 2321 is W2, and a maximum distance between the third groove segment 2313 and the third sidewall 2323 is W3, satisfying 10%×W1≤W2≤70%×W1, 10%×W1≤W3≤70%×W1, W2+W3<W1.

The first groove segment 2311 includes a first sub-groove segment 2311a and a second sub-groove segment 2311b, where an included angle between a tangent to the first sub-groove segment 2311a and the first sidewall 2321 is α1, and an included angle between a tangent to the second sub-groove segment 2312 and the first sidewall 2321 is α2, satisfying 40°≤α1≤80° and 40°≤α2≤80°.

The third groove segment 2313 includes a third sub-groove segment 2313a and a fourth sub-groove segment 2313b, where an included angle between a tangent to the third sub-groove segment 2313a and the third sidewall 2323 is α3, an included angle between a tangent to the fourth sub-groove segment 2313b and the third sidewall 2323 is α4, satisfying 40°≤α3≤80° and 40°≤α4≤80°, for example, α3 may be 40°, 65°, or 80°, and α4 may be 40°, 50°, 80°, or the like.

A length of the second groove segment 2312 is L1, a length of the fourth groove segment 2314 is L2, and a length of the score line 231 is L, satisfying L1≥1/4×L and L2≥1/4×L.

It should be noted that, in the absence of no conflict, the embodiments in the present application and the features in the embodiments can be combined with each other.

The above are only preferred embodiments of the present application and are not used to limit the present application. For those of ordinary skill in the art, the present application may have various changes and modifications. Any modifications, equivalent replacements, improvements, and the like made within the spirit and principles of the present application should be included in the protection scope of the present application.

## Claims

1. A pressure relief component, applied to a battery cell, wherein the pressure relief component is provided with a score line, the score line extends along a closed trajectory and encloses a pressure relief region, the score line comprises a first groove segment and a second groove segment, the first groove segment and the second groove segment are both arc segments, the first groove segment is curved toward a center point of the pressure relief region, and the second groove segment is curved away from the center point of the pressure relief region.

2. The pressure relief component according to claim 1, wherein an arc transition is formed between the first groove segment and the second groove segment.

3. The pressure relief component according to claim 1, wherein the score line further comprises a third groove segment, the third groove segment and the first groove segment are spaced apart along a first direction, the second groove segment connects the first groove segment and the third groove segment, the third groove segment is an arc segment, and the third groove segment is curved toward the center point of the pressure relief region.

4. The pressure relief component according to claim 3, wherein the first groove segment and the third groove segment are symmetrically arranged with respect to the center point of the pressure relief region.

5. The pressure relief component according to claim 3, wherein the score line further comprises a fourth groove segment, the fourth groove segment and the second groove segment are spaced apart along a second direction, the first groove segment, the second groove segment, the third groove segment, and the fourth groove segment are connected end to end to form a closed ring, the fourth groove segment is an arc segment, and the fourth groove segment is curved away from the center point of the pressure relief region; wherein the second direction intersects the first direction.

6. The pressure relief component according to claim 5, wherein the second direction is perpendicular to the first direction.

7. The pressure relief component according to claim 5, wherein the second groove segment and the fourth groove segment are symmetrically arranged with respect to the center point of the pressure relief region.

8. The pressure relief component according to claim 5, wherein the pressure relief component is provided with a countersink, and the score line is provided on a bottom wall of the countersink.

9. The pressure relief component according to claim 8, wherein the countersink is configured in a racetrack shape, a circular shape, or an elliptical shape.

10. The pressure relief component according to any one of claims 5 to 9, wherein the countersink comprises a first sidewall, a second sidewall, a third sidewall, and a fourth sidewall, wherein the first sidewall and the third sidewall are planar surfaces, the second sidewall and the fourth sidewall are arc surfaces, the first sidewall is located on an outer side of the first groove segment, the second sidewall is located on an outer side of the second groove segment, the third sidewall is located on an outer side of the third groove segment, and the fourth sidewall is located on an outer side of the fourth groove segment.

11. The pressure relief component according to claim 10, wherein a distance between the first groove segment and the first sidewall increases gradually from both ends of the first groove segment toward the middle thereof; and
a distance between the third groove segment and the third sidewall increases gradually from both ends of the third groove segment toward the middle thereof.

12. The pressure relief component according to claim 10, wherein along the first direction, the distance between the first sidewall and the third sidewall is W1, the maximum distance between the first groove segment and the first sidewall is W2, the maximum distance between the third groove segment and the third sidewall is W3, satisfying 10%×W1≤W2≤70%×W1 and 10%×W1≤W3≤70%×W1.

13. The pressure relief component according to claim 10, wherein along the first direction, the distance between the first sidewall and the third sidewall is W1, the maximum distance between the first groove segment and the first sidewall is W2, the maximum distance between the third groove segment and the third sidewall is W3, satisfying W2+W3<W1.

14. The pressure relief component according to claim 10, wherein the first groove segment comprises a first sub-groove segment and a second sub-groove segment, an included angle between a tangent to the first sub-groove segment and the first sidewall is α1, and an included angle between a tangent to the second sub-groove segment and the first sidewall is α2, satisfying 40°≤α1≤80° and 40°≤α2≤80°.

15. The pressure relief component according to any one of claims 5 to 14, wherein a length of the second groove segment is L1, a length of the fourth groove segment is L2, and a length of the score line is L, satisfying L1≥1/4×L and L2≥1/4×L.

16. A battery cell, comprising the pressure relief component according to any one of claims 1 to 15, wherein the pressure relief component is configured to release the internal pressure of the battery cell.

17. The battery cell according to claim 16, wherein the battery cell further comprises:
a housing having a wall portion;
wherein the pressure relief component is the wall portion.

18. The battery cell according to claim 16, wherein the battery cell further comprises:
a housing having a wall portion, the wall portion having a pressure relief hole;
wherein the pressure relief component is mounted on the wall portion and covers the pressure relief hole.

19. The battery cell according to claim 17 or 18, wherein the housing comprises:
a casing, wherein an accommodating cavity with an opening is formed inside the casing, and the accommodating cavity is used for accommodating an electrode assembly; and
an end cover closing the opening;
wherein the end cover is the wall portion.

20. The battery cell according to claim 17 or 18, wherein the housing comprises:
a casing, wherein an accommodating cavity with an opening is formed inside the casing, and the accommodating cavity is used for accommodating an electrode assembly; and
an end cover closing the opening;
wherein the casing comprises the wall portion.

21. A battery, comprising the battery cell according to any one of claims 16 to 20.

22. An electric device, comprising the battery according to claim 21, wherein the battery is configured to supply electrical energy.
